# EUROPEAN PATENT SPECIFICATION

(11) **EP 2 594 931 B1**
(45) Date of publication and mention of the grant of the patent: **28.12.2016**
(21) Application number: 11806478.1
(22) Date of filing: 12.07.2011
(51) Int. Cl.: G01N 29/04, G01N 29/44

(54) **Ultrasonic flaw detecting apparatus and method for test pieces with complex shapes**
Ultraschalldefekterkennungsvorrichtung und -verfahren für Testobjekte mit komplexen Formen
Appareil et procéde de détection des défauts par ultrasons pour des échantillons ayants des formes complexes.

(30) Priority: 12.07.2010 JP 2010158167
(43) Date of publication of application: 22.05.2013
(73) Proprietor: Kabushiki Kaisha Toshiba, Minato-ku Tokyo 105-8001 (JP)
(72) Inventor: MIURA, Takahiro, Tokyo 105-8001 (JP); YAMAMOTO, Setsu, Tokyo 105-8001 (JP); OCHIAI, Makoto, Tokyo 105-8001 (JP); HOSHI, Takeshi, Tokyo 105-8001 (JP); WATANABE, Kazumi, Tokyo 105-8001 (JP); NAGAI, Satoshi, Tokyo 105-8001 (JP); YOSHIDA, Masahiro, Tokyo 105-8001 (JP); ADACHI, Hiroyuki, Tokyo 105-8001 (JP); MITSUHASHI, Tadahiro, Tokyo 105-8001 (JP); YAMAMOTO, Satoshi, Tokyo 105-8001 (JP)
(74) Representative: Delumeau, François Guy
(86) International application number: PCT/JP2011/003976
(87) International publication number: WO 2012/008144

(56) References cited:
- JP-A- 56 128 455
- JP-A- 2006 138 672
- JP-A- 2007 170 877
- JP-A- 2008 286 640
- US-A- 6 092 420

## Description

### TECHNICAL FIELD

The present invention relates to an ultrasonic flaw detection device and an ultrasonic flaw detection method that are used to confirm the soundness of a test object in a non-destructive manner.

### BACKGROUND ART

In general, the ultrasonic flaw detection technique is a technique that enables the soundness of a test-object structure material to be confirmed in a non-destructive manger, and is used as an indispensable technique in various fields. In particular, in recent years, testing has been also required for structures in which a complex shape portion, such as a curved surface shape, is formed on the surface of a test object. There now is demand for the more advanced ultrasonic flaw detection technique.

However, the problem is that, if a complex shape, such as a curved surface, is formed on the surface of a test object, an ultrasonic wave cannot properly enter the test object. Incidentally, on a weld line and in a heat-affected zone thereof, deformations and umbrella folding could occur as heat is input by welding; a portion that has been designed to be flat may be formed into a complex shape such as a curved surface, including a convex shape formed as the molten metal is piled up.

For example, various pipes, including the nozzle pipe stands of nuclear power plants and thermal power plants among other things, and platforms of turbine blades, and the like are designed to have a complex shape such as curved surface, and therefore have many portions that are difficult to test. At present, if it is not possible to get ultrasonic waves into a test object, or even if the ultrasonic waves can enter the test object, the following and other problems could arise: a target flaw detection refraction angle cannot be achieved. If a phased array (PA) or a matrix array (MA) is used, the shape of the surface may vary for each incident position of each element.

As a means for solving the above problem, there is a conventional technique, disclosed in Patent Document 1, for example. As for the technique, what is disclosed is a method of measuring the shape of the surface of a test object with an ultrasonic probe, and optimizing a transmission delay time of a phased array (PA) in accordance with the measured shape before testing.

### PRIOR ART DOCUMENTS

### PATENT DOCUMENTS

Patent Document 1: Japanese Patent Application Laid-Open Publication No. 2007-170877, "ULTRASONIC FLAW DETECTION DEVICE AND METHOD". Documents JP 2006 138672 and JP 2008 286640 also disclose ultrasonic flaw detection devices.

### NON-PATENT DOCUMENT

Non-Patent Document 1: Measurement of defect size by ultrasonic wave - New development in non-destructive test -- KYORITSU SHUPPAN CO., LTD., published on July 10, 2009

### SUMMARY OF THE INVENTION

### PROBLEMS TO BE SOLVED BY THE INVENTION

However, as for the technique disclosed in the above Patent Document 1, only the following is mentioned: In accordance with the shape of the surface of the test object, the conditions for the delay time of ultrasonic problem that the incident angle of the ultrasonic waves varies. However. during a process of displaying flaw detection results, if the flaw detection results are displayed without taking into account the effects of the shape of the surface, it turns out that an echo indicative of a defect is detected at a different position from an actual flaw detection position.

As for the position of the indication echo, unless the flaw detection results are separately corrected by taking into account the effects of the shape of the surface, the accurate position of the defect cannot be detected. As a result, error in the detection position would emerge, making it possible only to carry out low-accuracy ultrasonic flaw detection. Moreover, other problems, including the following, could arise: the indication echo becomes blurred.

The present invention has been made in view of the above circumstances. The object of the present invention is to provide an ultrasonic flaw detection device and an ultrasonic flaw detection method that are able to obtain high-accuracy detection results even when the surface of a test object is formed into a complex shape.

### MEANS FOR SOLVING THE PROBLEM

In order to achieve the above-mentioned object, according to the present invention there is provided an ultrasonic flaw detection device according to claim 1.

Furthermore in order to achieve the above-mentioned object, according to the present invention there is provided an ultrasonic flaw detection according to claim 3.

### ADVANTAGE OF THE INVENTION

According to the ultrasonic flaw detection device and ultrasonic flaw detection method of the present invention, even if the surface of a test object is formed into a complex shape, high-accuracy detection results are obtained, and accurate ultrasonic flaw detection can be carried out.

### BRIEF DESCRIPTION OF THE DRAWINGS

FIG. 1 is a block diagram showing one embodiment of an ultrasonic flaw detection device according to the present invention.
FIG. 2 is an explanatory diagram showing a typical example of flaw detection.
FIG. 3 is an explanatory diagram showing a typical example of reconfiguring flaw detection results.
FIG. 4 is a flowchart showing a typical flaw detection method.
FIG. 5 is an explanatory diagram showing propagation paths of ultrasonic waves at a time when a surface of a test object is non-planar.
FIG. 6 is an explanatory diagram showing a method of reconfiguring without taking into account the shape of a surface of a test object.
FIG. 7 is an explanatory diagram showing a method of reconfiguring by taking into account the shape of a surface of a test object.
FIG. 8 is a flowchart showing the case where the shape of the surface is measured to reconfigure flaw detection results.
FIG. 9 is a flowchart showing the case where flaw detection results are reconfigured in accordance with the shape of the surface read from design data.
FIG. 10 is an explanatory diagram showing the situation where ultrasonic waves oscillated in the present embodiment are propagated inside a test object.
FIG. 11 is an explanatory diagram showing the case where the slope θ of the surface of a test object is used in calculating an actual incident angle and a flaw detection refraction angle.
FIG. 12 is a flowchart for associating reception signals with test-object position information.
FIG. 13 is an explanatory diagram showing how to calculate the slope of the surface of a test object.
FIG. 14 is an explanatory diagram showing another method of calculating the slope of the surface of a test object.
FIG. 15 is a diagram showing an image of an example in which a reconfiguration process is performed with the shape of the surface of a test object not taken into account.
FIG. 16 is a diagram showing an image of an example in which a reconfiguration process is performed with the shape of the surface of a test object taken into account.
FIG. 17 is a diagram showing the intensity of ultrasonic waves by sound-field simulation.
FIG. 18 is a diagram showing the intensity of ultrasonic waves by sound-field simulation.
FIG. 19 is a diagram showing an image of results of a reconfiguration process that is performed with the effects of the shape of a curved surface not taken into account.
FIG. 20 is a diagram showing an image of results of a reconfiguration process that is performed with the effects of the shape of a curved surface taken into account.

### EMBODIMENTS FOR CARRYING OUT THE INVENTION

Hereinafter, an embodiment of an ultrasonic flaw detection device of the present invention will be described with reference to the accompanying drawings.

According to the present embodiment, an ultrasonic probe can be any configuration made up of: a piezoelectric element that is made from ceramics, a composite material thereof, or any other material and is able to generate ultrasonic waves because of the piezoelectric effect thereof, a piezoelectric element that is made from a polymeric film, or any other mechanism that is able to generate ultrasonic waves; a damping material which damps ultrasonic waves; and a front plate that is attached to a transmission plane of ultrasonic waves. Alternatively, the ultrasonic probe may be a combination of the above components. The ultrasonic probe is generally referred to as an ultrasonic search unit.

According to the present embodiment, what is described is the case where a sensor generally called array sensor, in which piezoelectric elements are arranged in a one-dimensional manner, is applied. However, a matrix sensor, in which piezoelectric elements are arranged in a two-dimensional manner, may also be applied.

According to the present embodiment, for example, acoustic contact media are media able to allow ultrasonic waves to propagate, including water, glycerin, machine oil, acrylic, and polystyrene gel. Incidentally, according to the present embodiment, the description of the acoustic contact media is sometimes omitted at a time when ultrasonic waves enter a test object from an ultrasonic probe. Moreover, the details of the flaw detection method involving control of the delay in transmitting and receiving ultrasonic waves using a plurality of piezoelectric elements such as a typical phased array will not be described because the technique is already well-known given the above Non-patent Document 1 and the like.

Hereinafter, the specific configuration of an ultrasonic flaw detection device of the present embodiment will be described.

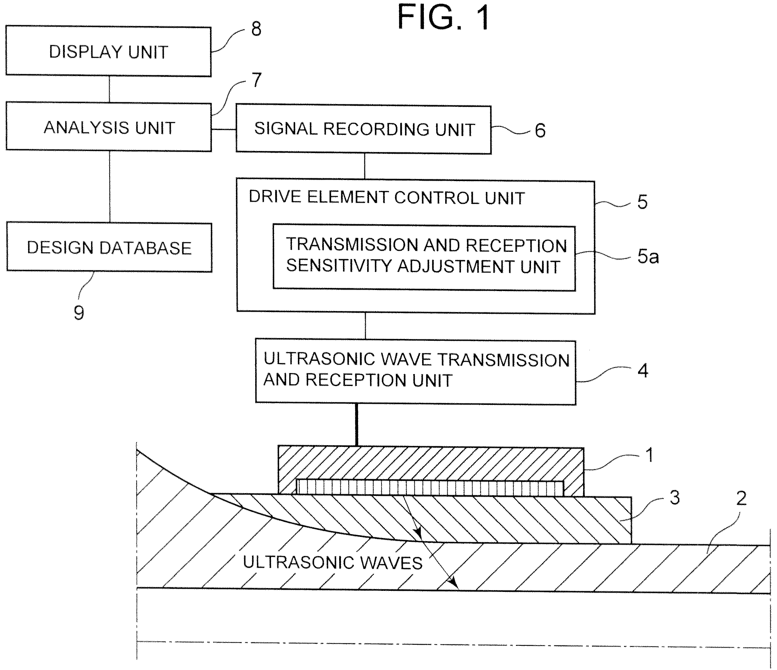

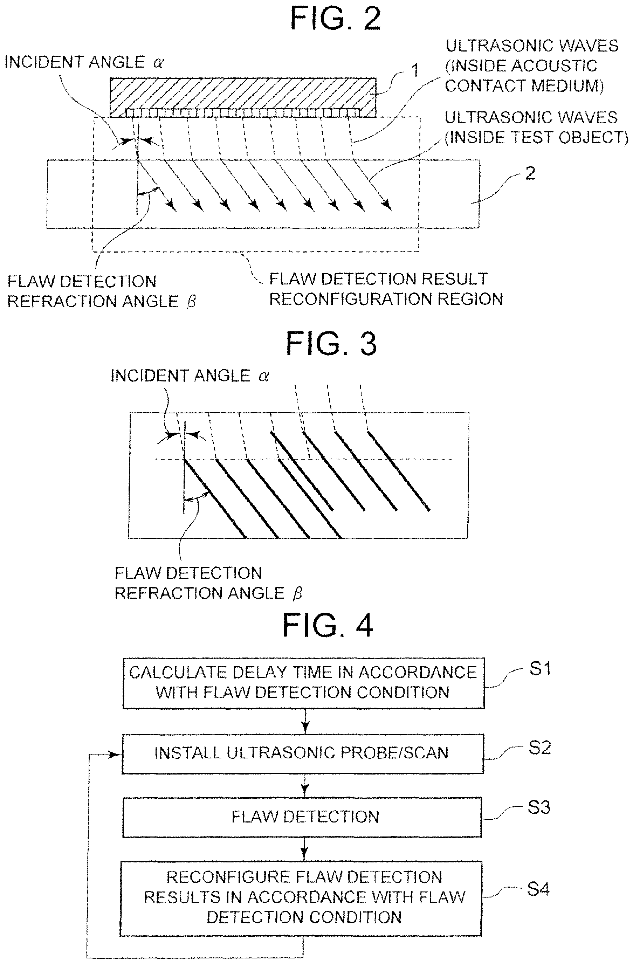

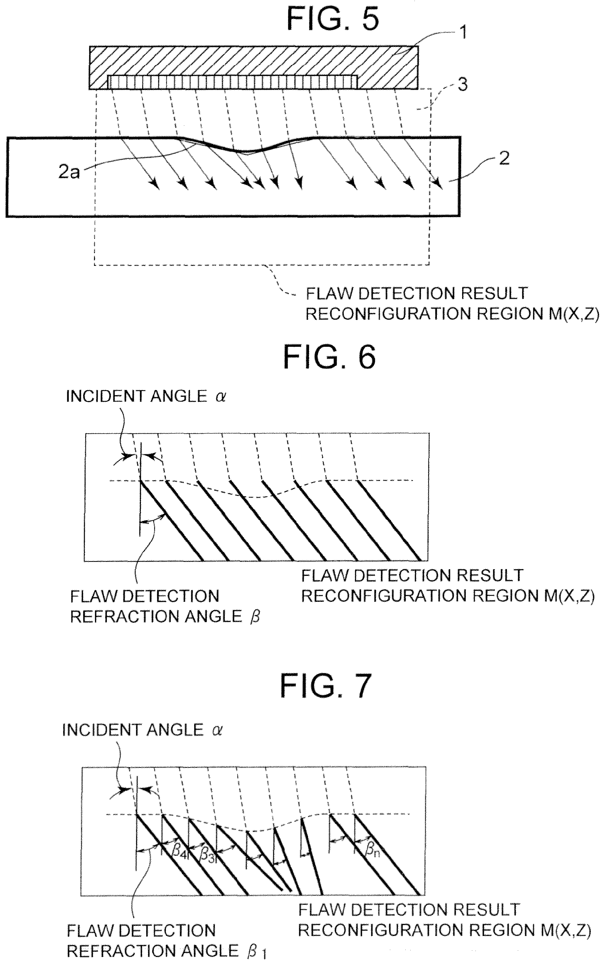

FIG. 1 is a block diagram showing one embodiment of an ultrasonic flaw detection device according to the present invention. FIG. 2 is an explanatory diagram showing a typical example of flaw detection. FIG. 3 is an explanatory diagram showing a typical example of reconfiguring flaw detection results. FIG. 4 is a flowchart showing a typical flaw detection method. FIG. 5 is an explanatory diagram showing propagation paths of ultrasonic waves at a time when a surface of a test object is non-planar.

Incidentally, in the following description, the test object is a pipe. The following describes the case where a defective portion of the pipe is detected by ultrasonic waves. In FIG. 1, the center of the pipe is indicated by an alternate long and short dash line.

As shown in FIG. 1, the ultrasonic flaw detection device includes an ultrasonic probe 1. The ultrasonic probe 1 drives a plurality of ultrasonic elements to enter ultrasonic waves into a pipe, which is a test object 2, via an acoustic contact medium 3; and receives the ultrasonic waves reflected from the test object 2.

The ultrasonic flaw detection device also includes an ultrasonic wave transmission and reception unit 4, which transmits and receives ultrasonic waves through the ultrasonic probe 1; a drive element control unit 5, which controls the ultrasonic elements that are actually driven by the ultrasonic wave transmission and reception unit 4; a signal recording unit 6, which functions as a storage means to record reception signals (ultrasonic signals) received by the ultrasonic probe 1; an analysis unit 7, which analyzes the reception signals recorded in the signal recording unit 6 to calculate flaw detection results; a display unit 8, which displays the flaw detection results obtained by the analysis unit 7; and a design database 9, in which design-stage data about the shape of the surface of the test object 2 are recorded in advance.

The drive element control unit 5 includes a transmission and reception sensitivity adjustment unit 5a, which adjusts the transmission and reception sensitivity, and constitutes a delay means that is used to oscillate each of a plurality of ultrasonic elements at a given time. The signal recording unit 6 constitutes a storage means for storing ultrasonic signals received by the drive element control unit 5.

The analysis unit 7 constitutes an analysis means for calculating flaw detection results on the basis of propagation paths of ultrasonic waves that are obtained on the basis of the surface information of the test object 2 that the ultrasonic waves enter. That is, the analysis unit 7 calculates the propagation paths of ultrasonic waves using the relative angle between the surface of the test object 2 at a position where an ultrasonic wave enters and the ultrasonic probe 1.

Incidentally, as long as the ultrasonic flaw detection device shown in FIG. 1 is equipped with a mechanism that adds a delay time to the ultrasonic probe 1 made up of a plurality of piezoelectric elements and controls the transmission and reception processes, the ultrasonic flaw detection device may have another configuration.

Based on FIGS. 2 and 3, the following describes a flaw detection method at a time when a typical phased array (PA) is used.

As shown in FIG. 2, in order to get ultrasonic waves into the test object 2 at an arbitrary flaw detection refraction angle, an appropriate time delay is added to a plurality of ultrasonic elements (also referred to as piezoelectric elements, hereinafter) provided in the ultrasonic probe 1 of the phased array (PA) when the ultrasonic elements are oscillated. Therefore, it is possible to control the direction of the ultrasonic waves and the focal position. Incidentally, according to the present embodiment, what is described is the case where an exemplary linear scan method is applied. However, various other flaw detection methods, such as sector scanning, may be used.

If a reflection source, such as a defect, exists inside the test object 2, the ultrasonic waves that have entered the test object 2 are reflected and scattered. The reflected waves are received by the piezoelectric elements of the ultrasonic probe 1. The waveform of ultrasonic waves thus obtained can be turned into an image in an electronic scan direction in accordance with the set incident angle α of ultrasonic waves and the flaw detection refraction angle β. In general, the imaging process is referred to as B-scan or S-scan. The imaging process is reconfigured based on the incident angle α and the flaw detection refraction angle 6 that meet the flaw detection conditions at the time of flaw detection as shown in FIG. 3. Incidentally, in the embodiment described below, B-scan is used.

Such a typical flaw detection method will be described based on FIG. 4.

As shown in FIG. 4, a delay time is calculated on the basis of the flaw detection conditions, such as the flaw detection refraction angle β with respect to the test object 2 and the focal position (Step S1). The ultrasonic probe 1 is placed at a position where the test object 2 exists (Step S2). A process of detecting a flaw in the test object 2 is carried out (Step S3). Then, the ultrasonic data that are obtained in accordance with the flaw detection refraction angle β are reconfigured, and B-scan is created (Step S4). Then, the test position of the test object 2 is changed again before the processes of steps S3 and S4 are repeated.

However, for example, if the extra banking of a weld metal, the waviness associated with grinding (a partially curved surface), or the like is formed on the surface of the test object 2, or if the test object 2 is non-planar in the first place, the following problem arises: an error occurs in the test results if the process of detecting a flaw and the process of reconfiguring the results (Step S4) are performed under the flaw detection conditions that are set on the assumption of a planar condition shown in FIG. 3.

The above problem will be described based on FIG. 5. FIG. 5 shows the case where a test is carried out when a curved surface 2a, such as waviness, is formed on the surface of the test object 2. In this case, if the flaw detection conditions are calculated under the planar condition as shown in FIG. 2, a flaw can be detected with the incident angle α from any position of the ultrasonic probe 1. Therefore, when the ultrasonic waves enter an area of the test object 2's surface where the curved surface 2a is formed, the flaw detection refraction angle 6 is not fixed because of Snell's law and changes in various ways according to the incident position. Accordingly, when the reconfiguration process is performed on the basis of the ultrasonic reception signals, the flaw detection refraction angle 6 that is among the reconfiguration conditions becomes different from the actual flaw detection refraction angle β if the shape of the surface of the test object 2 is not taken into account. As a result, the reconfiguration process is carried out under different conditions from those of the actual propagation paths of ultrasonic waves.

The above point will be described in more detail with the use of FIGS. 6 and 7.

FIG. 6 is an explanatory diagram showing a method of reconfiguring without taking into account the shape of a surface of a test object. FIG. 7 is an explanatory diagram showing a method of reconfiguring by taking into account the shape of a surface of a test object. More specifically, FIGS. 6 and 7 each show propagation paths of ultrasonic waves that are used for calculation of reconfiguration at a time when the flaw detection results are displayed in the form of B-scan. FIG. 6 shows an example in which the shape of the surface of the test object 2 is not taken into account. FIG. 7 shows an example in which the shape of the surface of the test object 2 is taken into account.

In the example shown in FIG. 6, the ultrasonic propagation paths are based on the assumption of a planar shape. Reconfiguration takes place in such a way as not to reflect the flaw detection refraction angle β inside the actual test object 2. That is, reconfiguration takes place using different ultrasonic propagation paths than the actual paths. Therefore, an error occurs as to the position of a defect that is obtained by the reconfiguration, and the like, relative to the position of a defect that actually occurs in the test object 2.

On the other hand, as shown in FIG. 7, if reconfiguration takes place using the propagation paths of ultrasonic waves with the actual shape of the surface of the test object 2 taken into account (i.e. using the actual propagation paths of ultrasonic waves), the above error or the like does not occur. Thus, the propagation paths of ultrasonic waves shown in FIG. 7 can be obtained by calculating the flaw detection refraction angle β from the shape of the surface of the test object 2 and the incident angle α.

In that manner, according to the present embodiment, the flaw detection refraction angle β is calculated at each incident-point position; the flaw detection results are reconfigured in accordance with the angle. Therefore, it is possible to reflect the results of actual ultrasonic flaw detection, as well as to carry out a test without position errors and other errors.

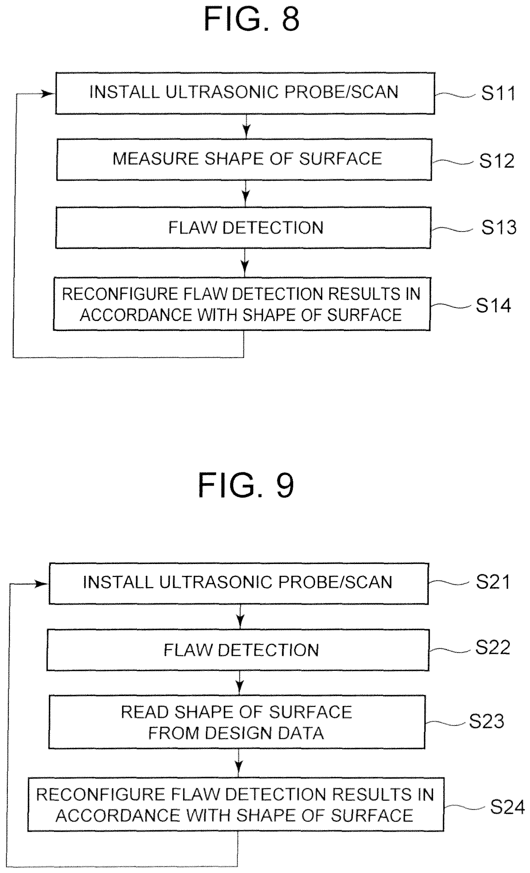

The following describes two processes at a time when the flaw detection results are reconfigured with the shape of the surface of the test object 2 taken into consideration, on the basis of FIGS. 8 and 9.

FIG. 8 is a flowchart showing the case where the shape of the surface is measured to reconfigure the flaw detection results. FIG. 9 is a flowchart showing the case where the flaw detection results are reconfigured in accordance with the shape of the surface read from design data.

In FIG. 8, at step S11, the ultrasonic probe 1 is placed above the test object 2, with the acoustic contact medium 3 therebetween; the test object 2 is scanned. Then, at step S12, the shape of the surface of the test object 2 is measured. Subsequently, an ultrasonic flaw detection process is performed with the ultrasonic probe 1 (Step S13). After that, a process of reconfiguring the flaw detection results is carried out in accordance with the shape of the surface of the test object 2 that is measured at step S12 (Step S14).

In FIG. 9, at step S21, the ultrasonic probe 1 is placed above the test object 2, with the acoustic contact medium 3 therebetween; the test object 2 is scanned. Then, at step S22, an ultrasonic flaw detection process is performed with the ultrasonic probe 1. Subsequently, a process of reading the shape of the surface of the test object 2 that is recorded in advance in the design database 9 is carried out (Step S23). After that, a process of reconfiguring the flaw detection results is carried out in accordance with the shape of the surface thereof (Step S24).

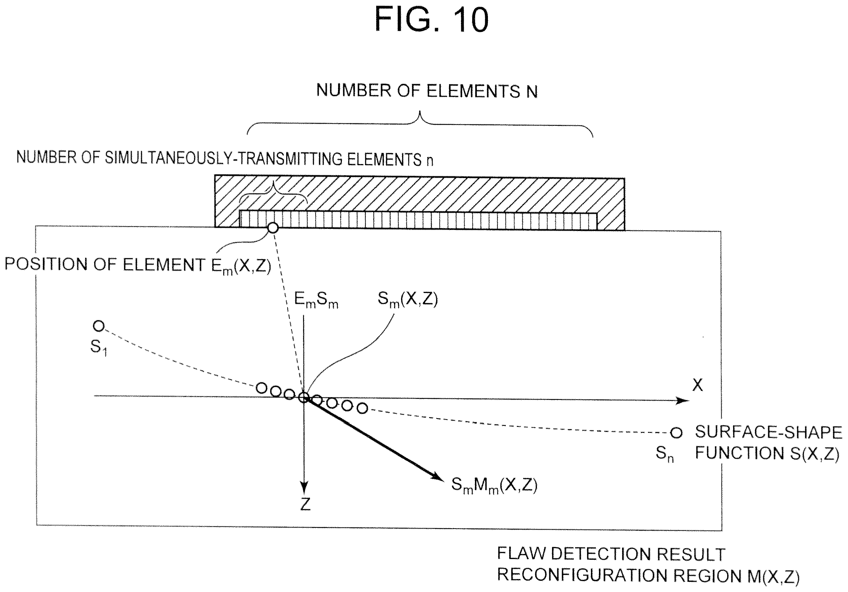

The following describes a method of calculating the flaw detection refraction angle β with the use of FIGS. 10 to 12.

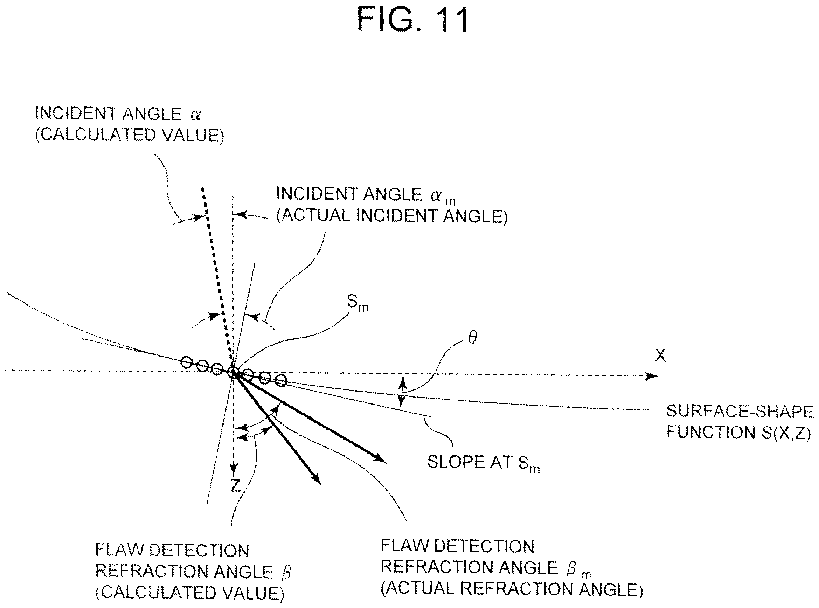

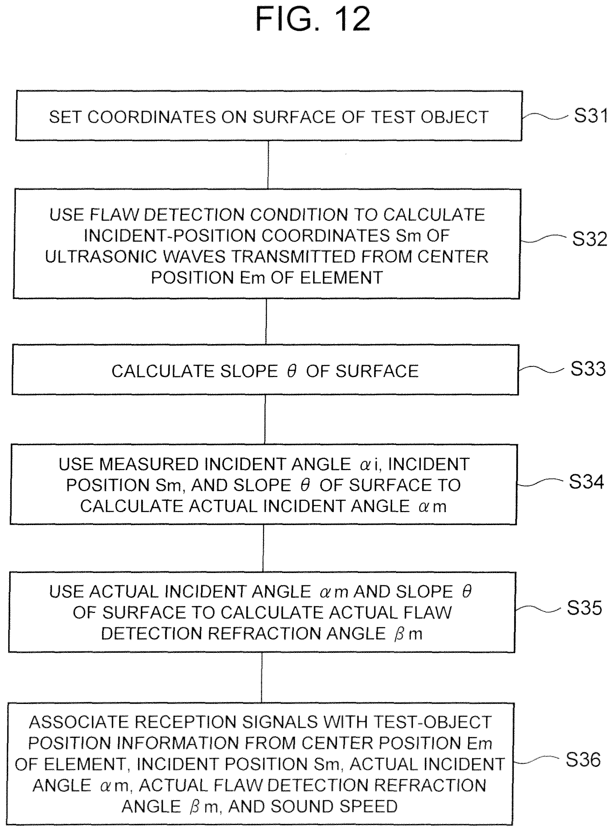

FIG. 10 is an explanatory diagram showing the situation where ultrasonic waves oscillated in the present embodiment are propagated inside the test object. FIG. 11 is an explanatory diagram showing the case where the slope θ of the surface of the test object is used in calculating an actual incident angle and a flaw detection refraction angle. FIG. 12 is a flowchart for associating reception signals with test-object position information.

As shown in FIG. 10, from the position Eₘ of the center of a element that carries out simultaneous transmission, the ultrasonic waves are propagated through the acoustic contact medium 3 at the incident angle αᵢ that is calculated in advance on the basis of the positional relation between the ultrasonic probe 1 and the test object 2 and the flaw detection conditions (including the propagation direction of the ultrasonic waves in the test object 2, and information about a position on which the ultrasonic waves are focused and the like); the ultrasonic waves then reach the surface of the test object 2. Incidentally, the incident angle αᵢ is equivalent to the incident angle α shown in FIGS. 6 and 7. In other words, the incident angle αᵢ is an angle at which ultrasonic waves are transmitted from the ultrasonic probe 1 to the test object 2. If the shape of the surface is not planar, the incident angle αᵢ is different from the actual incident angle. In this case, the center position Eₘ of the element is the position information of the ultrasonic element; the incident angle αᵢ is an angle at which ultrasonic waves are transmitted.

As shown in FIGS. 10 and 12, on the basis of the results of measuring the shape of the surface of the test object 2 in advance, or on the basis of design information that is recorded in advance in the design database 9, information about coordinates S₁ to Sₙ is set on the surface of the test object 2. Incidentally, according to the present embodiment, what is described is the case where a phased-array probe is used. Therefore, each piece of the coordinate information is two-dimensional (S(x, z)). However, if a matrix-array probe is used, the coordinate information is set in three-dimensional (S(x, y, z)) (Step S31).

Then, on the basis of the center position Eₘ of an ultrasonic element and the incident angle αᵢ of ultrasonic waves transmitted from each ultrasonic element, it is possible to calculate the incident position (also referred to as incident point, hereinafter) Sₘ(x, z) of the ultrasonic waves transmitted from the center position Eₘ of the ultrasonic element (Step S32).

In this case, as shown in FIG. 11, by using the slope θ of the surface of the test object at the coordinates of the incident position Sₘ(x, z), the actual incident angle αₘ and the actual flaw detection refraction angle βₘ can be calculated by Snell's law. Incidentally, the slope θ of the surface is the slope relative to the surface of the test object 2 that is assumed to be planar. In other words, the slope θ of the surface is the relative angle between the surface of the actual test object 2 and the ultrasonic probe 1 at the ultrasonic-wave incident position. Incidentally, a method of calculating the slope θ of the surface will be described later (Steps S33, S34, S35).

As a result, the following become clear: the propagation distance EₘSₘ, which extends from the center position Eₘ of the transmitted ultrasonic element to the incident position Sₘ; a certain position SₘMₘ(x, z) in the test object 2 from the incident position Sₘ; and the propagation direction of the ultrasonic waves in the test object 2. Therefore, it is possible to calculate the propagation path of the actual ultrasonic waves.

The speed of sound is already known in the acoustic contact medium 3 and the test object 2. Therefore, in data of the ultrasonic signals Um that are received after ultrasonic waves are transmitted from the center position Eₘ of an element, it is possible to calculate how each point in time of the ultrasonic signals is associated with a position inside the test object. Incidentally, although not shown in the diagrams, the ultrasonic signals Um are the waveform of signals, with the vertical axis representing the amplitude of the signals and the horizontal axis representing time. (Step S36).

A series of processes described above is repeated for all the positions of the elements that carry out ultrasonic flaw detection. Therefore, reconfiguration is possible with the shape of the surface of the test object 2 taken into consideration.

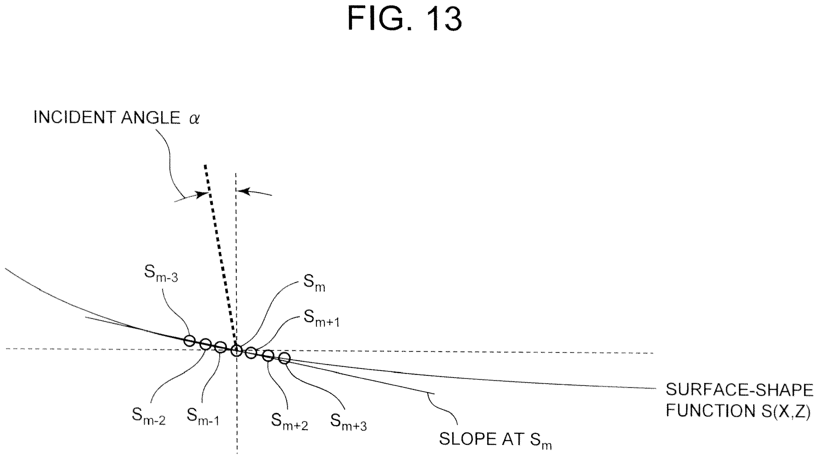

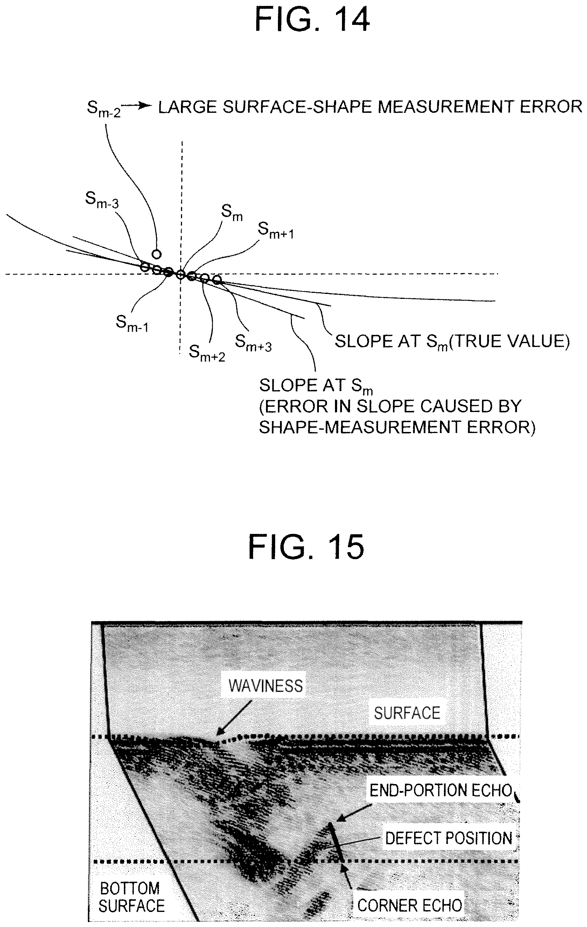

The following describes a method of calculating the slope θ of the surface of the test object 2 at the above coordinates Sm. FIG. 13 is an explanatory diagram showing how to calculate the slope of the surface of the test object. FIG. 14 is an explanatory diagram showing another method of calculating the slope of the surface of the test object. The slope θ of the surface is the relative angle between the ultrasonic probe 1 and the test object 2.

As shown in FIG. 13, the slope θ of the surface at the incident point Sₘ of the above ultrasonic waves can be calculated from the coordinate points Sₘ₋₁ and Sₘ₊₁, which are adjacent to the incident point Sₘ of the ultrasonic waves. Instead of using the adjacent coordinates, the coordinate points Sₘ₋ₐ and Sₘ₊ₐ, which are located a distance of "a" away from the incident point Sₘ of the ultrasonic waves, can be used in calculating the slope θ of the surface.

Furthermore, another method is also available to calculate the slope: Using each point between the coordinate points Sₘ₋ₐ and Sₘ₊ₐ, a straight-line approximation may be made by means of least-squares method or the like in such a way as to pass through each point. Moreover, as shown in FIG. 14, noise may emerge in the shape-measurement results. Therefore, the slope θ of the surface may be calculated after the data points that vary widely are removed from a plurality of points between the coordinate points Sₘ₋ₐ and Sₘ₊ₐ.

Incidentally, when the incident point Sₘ is identified from the center position Eₘ of the above ultrasonic element and the certain position SₘMₘ in the test object 2, the following calculation is also possible: the slope θ of the surface at each position of a surface-shape function S is first calculated; the calculation is carried out by Snell's law from the coordinates S₁ to Sₙ with respect to the center position Eₘ and the certain position SₘMₘ in the test object 2; and a value with the smallest absolute value of the calculation result is regarded as the incident point Sₘ in the positional relation between the center position Eₘ and the certain position SₘMₘ in the test object 2.

Moreover, in creating a flaw detection result reconfiguration region M (x, z) shown in FIG. 10, both the following two methods can be applied: a method of calculating a position to the flaw detection result M from the ultrasonic signals Uₘ; and a method of calculating the position of an ultrasonic signal Uₘ corresponding to each coordinate from the coordinate points of the flaw detection results M.

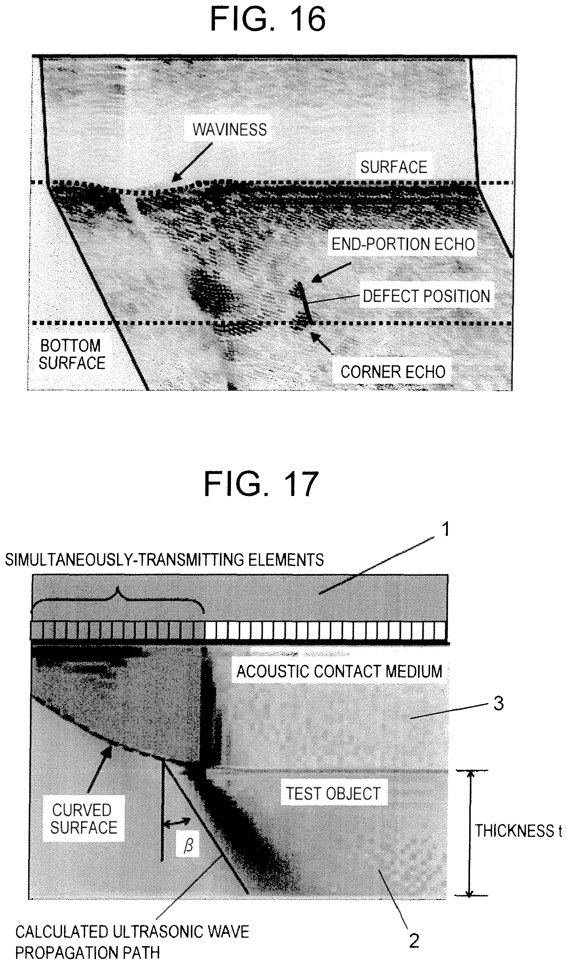

The following describes a reconfiguration process that does not take into account the shape of the surface and a reconfiguration process that takes into account the shape of the surface, while making a comparison therebetween, with the use of the results of reconfiguration for flaw detection signals that are obtained by detecting a flaw in a test object to which a flaw is actually added. FIG. 15 shows an example in which the reconfiguration process is performed with the shape of the surface of the test object 2 not taken into account. FIG. 16 shows an example in which the reconfiguration process is performed with the shape of the surface of the test object 2 taken into account. In the examples, a flaw is detected under the condition that ultrasonic waves are transmitted from the curved surface (waviness) 2a, which exists on a flaw detection plane of the test object 2, to a defect, which is added to the test object 2.

FIG. 15 shows the results of detecting a flaw in the test object 2 having waviness under the condition that ultrasonic waves enter the plane at 45 degrees, and reconfiguring the flaw detection results with the effects of the shape of the curved surface not taken into account.

In the example shown in FIG. 15, it is clear that a peak indicating a corner echo portion (an echo from a defective opening portion that occurs on the opposite side of the test object 2 from the flaw detection plane) is positioned closer to the inside than a plane that is on the opposite side of the test object 2 from the flaw detection plane. Moreover, a defective end-portion echo (an echo from an end portion that is closer to the inside of the defective test object) does not show a clear peak.

On the other hand, in the example shown in FIG. 16, a peak of a corner echo portion is positioned on a plane that is on the opposite side of the test object 2 from the flow detection plane. Moreover, an end-portion echo shows a clear peak.

Furthermore, when a comparison is made between FIGS. 15 and 16, it becomes clear that, in the example shown in FIG. 15, a region indicating an echo has appeared at a position where a defect, which is positioned on the left side of the paper surface of a defective position, and the like do not exist.

In that manner, in the reconfiguration process that does not take into account the shape of the surface, the sign that indicates a corner echo and end-portion echo of a defect that is added to the inside of the test object 2 that is affected by the curved surface is unclear; and an error occurs in the position of the sign relative to the position of the defect that is actually added.

On the other hand, in the results of the reconfiguration process that takes into account the effects of the shape of the curved surface, the sign that indicates a corner echo and end-portion echo of a defect is clearer than that shown in FIG. 15, and the position of the sign indicating the defect is also accurate.

According to the above-described present embodiment, the problem is that the flaw detection refraction angle β of the ultrasonic waves that enter the test object 2 vary according to the position. Moreover, if the curvature of the surface of the test object 2 is large as shown in FIGS. 10 to 14, the flaw detection refraction angle β changes significantly. Therefore, the problem is that the ultrasonic waves cannot enter a region that is to be tested.

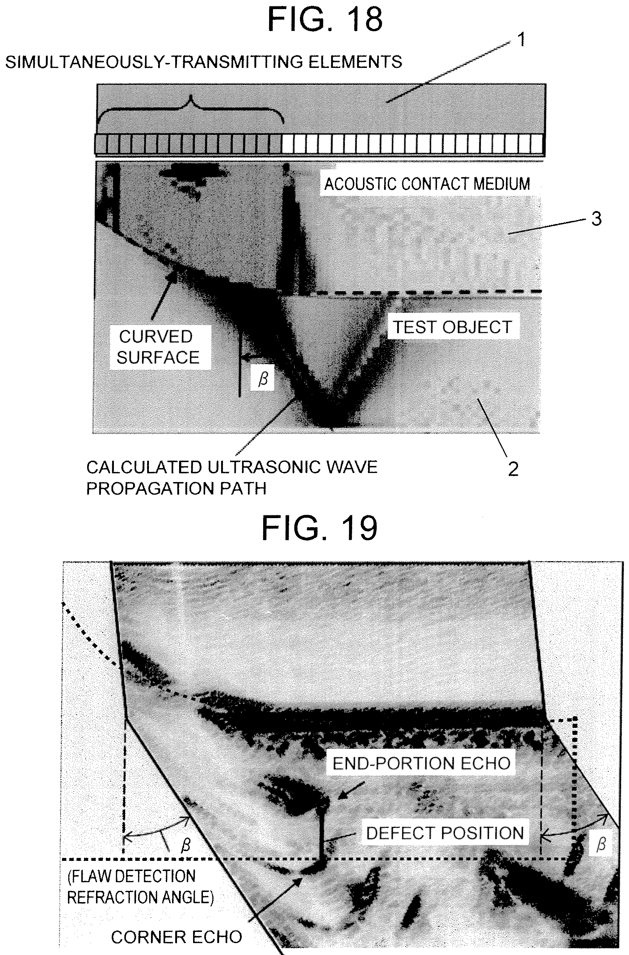

FIGS. 17 and 18 show the results of sound-field simulation, showing the intensity of ultrasonic waves at a time when the ultrasonic waves enter a curved surface under a transmission delay condition of the ultrasonic probe 1 that is calculated under the condition that the focus of the ultrasonic waves is formed with a flaw detection refraction angle 6 of 45 degrees and 3/4 t relative to the thickness t of a test object at a time when the test object is planar.

As shown in FIG. 17, the ultrasonic waves enter the test object 2 from part of a planar portion. However, it is possible to confirm that the ultrasonic waves cannot properly enter from a curved surface. Meanwhile, as shown in FIG. 18, if the ultrasonic waves enter under a transmission delay condition corresponding to a curved surface, it is possible to confirm that the ultrasonic waves also enter the test object 2 from the curved surface.

In that manner, the incident angle at each position is so controlled that the flaw detection conditions inside the test object 2 become substantially equal depending on the shape of the surface of the test object 2. As a result, the flaw detection conditions inside the test object 2 become constant, and it becomes possible to enter ultrasonic waves into a position where flaw detection was impossible.

Even in the present embodiment, if the flaw detection results are reconfigured as described above, the reconfiguration needs to be performed in accordance with the shape of the surface. For example, FIG. 19 shows the results of reconfiguring the flaw detection results with the effects of the shape of the curved surface not taken into account after calculating a delay time condition for transmitting ultrasonic waves with the shape of the curved surface taken into account.

Given what is shown in FIG. 19, it is possible to confirm that, even though a corner echo portion becomes a position that is affected by the curved surface, a sign of a corner echo extends in an arc shape; and that there is a slight difference between the position of a sign of a peak and the position of an actual corner.

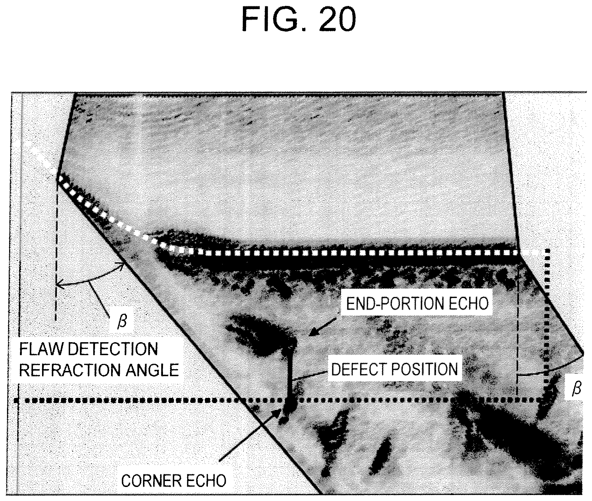

Meanwhile, FIG. 20 shows the results of reconfiguration with the effects of the shape of the curved surface taken into account. It is possible to confirm that a corner-echo sign becomes clearer than that shown in FIG. 19, and the error in the indication position of the peak has disappeared. The defect position is substantially the same as the position of the defect that is actually added.

In that manner, according to the present embodiment, the flaw detection results are reconfigured in accordance with the shape of the surface of the test object 2. Therefore, it is possible to provide an ultrasonic flaw detection device and an ultrasonic flaw detection method that are high in detection accuracy for the surface of the test object 2 that has been formed into a complex shape. As a result, it becomes possible to carry out accurate ultrasonic flaw detection, as well as to improve the reliability of the device.

Incidentally, the present embodiment can be applied not only to the case where a flaw is detected under a transmission delay condition that does not take into account the shape of the surface, but also to the case where a flaw is detected under a transmission delay condition that takes into account the shape. Moreover, in the above embodiment, the case where the test object 2 is in a non-planar shape is described. However, the above embodiment is also effective in: the case where, while the test object is planar, the positional relation between the ultrasonic probe 1 and the test object 2 is not parallel; or the case where, even though the positional relation is parallel, the measurement should be performed accurately by removing the effects of an installation error of the distance from the ultrasonic probe 1 to the surface of the test object 2 as much as possible. That is, by performing a reconfiguration process with the use of surface information, such as the shape of the surface at a position where ultrasonic waves enter on the surface of the test object 2 and the relative angle, it is possible to improve the accuracy of flaw detection.

The above has described the embodiment of the present invention. However, the embodiment is given for illustrative purposes only, and is not intended to limit the scope of the invention. The above novel embodiment may be embodied in various other forms. Various omissions, replacements, and changes may be made without departing from the spirit of the present invention.

For example, according to the above embodiment, when information about the shape of the surface is obtained, the information is acquired from the design data, or is acquired by measuring the shape of the surface during the test. However, the shape of the surface may be measured in advance before the test.

According to the above embodiment, the incident point Sₘ is identified by using the center position Eₘ of an element and the incident angle αᵢ of ultrasonic waves. However, for example, the incident point Sₘ may also be calculated in the following manner: the slope θ of the surface at each position of the surface coordinates S is first calculated; the calculation is performed by Snell's law from the coordinates S₁ to Sₙ for the center position Eₘ and the certain position SₘMₘ in the test object 2; and a value with the smallest absolute value of the calculation result is regarded as the incident point Sₘ in the positional relation between the center position Eₘ and the certain position SₘMₘ in the test object 2.

In this case, the coordinates whose calculation result is zero is a true incident point. However, depending on the number of settings of each coordinate S, the coordinates may not be set on the true incident point. Therefore, the coordinates S which are closest to the true incident point and whose certain value is smallest may be used as an incident position.

### EXPLANATION OF THE SYMBOLS

- 1:: Ultrasonic probe
- 2:: Test object
- 3:: Acoustic contact medium
- 4:: Ultrasonic wave transmission and reception unit
- 5:: Drive element control unit (Delay means)
- 6:: Signal recording unit (Storage means)
- 7:: Analysis unit (Analysis means)
- 8:: Display unit
- 9:: Design database

## Claims

1. An ultrasonic flaw detection device, comprising:
an ultrasonic probe (1) made up of a plurality of ultrasonic elements that transmit ultrasonic waves to a test object (2) at a transmission angle calculated in advance and that receive ultrasonic waves reflected from a test object after ultrasonic waves enter the test object from the plurality of ultrasonic elements;
a delay means (5) for oscillating each of a plurality of ultrasonic elements with an arbitrary time delay;
a storage means (6) for storing the received ultrasonic signals; and
an analysis means (7) for analyzing reception signals that the ultrasonic probe obtains by receiving the reflected ultrasonic waves to calculate flaw detection results,
wherein
the analysis means :
identify an incident position of the ultrasonic waves on a surface of the test object using a transmission angle of ultrasonic waves entering the test object from the ultrasonic probe and position information of ultrasonic elements transmitting the ultrasonic waves to identify,
calculate the slope of the surface of the test object at the incident position, the slope of the surface being the slope relative to a surface of the test object that is assumed to be planar,
calculate an actual incident angle using a measured incident angle, the incident position, and said slope of the surface,
calculate propagation paths of the ultrasonic waves from a relative angle between the surface of the test object and the ultrasonic probe at a position where the ultrasonic waves enter, and
calculate flaw detection results using the calculated propagation paths.

2. The ultrasonic flaw detection device according to claim 1, wherein:
the analysis means calculates an incident angle of the ultrasonic waves for the test object on the basis of the transmission angle, the incident position, and the relative angle;
the analysis means calculates a refraction angle of the ultrasonic waves entering the test object on the basis of the incident angle; and
the analysis means calculates flaw detection results using the propagation paths of the ultrasonic waves that are calculated based on the transmission angle, the incident position, and the refraction angle.

3. An ultrasonic flaw detection method, comprising:
an ultrasonic wave entering step of entering ultrasonic waves into a test object at a transmission angle calculated in advance by oscillating each of a plurality of ultrasonic elements in an ultrasonic probe with an arbitrary time delay;
an ultrasonic wave reception step of receiving ultrasonic waves reflected from the test object after the ultrasonic wave entering step;
a storage step of storing the received ultrasonic signals after the ultrasonic wave reception step; and
an analysis step of analyzing reception signals that the ultrasonic probe obtains by receiving the reflected ultrasonic waves to calculate flaw detection results after the ultrasonic wave reception step, wherein
the analysis step includes:
an incident position identifying step (S32) of using a transmission angle of ultrasonic waves entering the test object from the ultrasonic probe and position information of ultrasonic elements transmitting the ultrasonic waves to identify an incident position of the ultrasonic waves on a surface of the test object,
a step of calculating slope (S33) of the surface of the test object at the incident position, the slope of the surface being the slope relative to a surface of the test object that is assumed to be planar,
a step of calculating an actual incident angle (S34) using a measured incident angle, the incident position, and said slope of the surface,
a step of calculating propagation paths of the ultrasonic waves from a relative angle between the surface of the test object and the ultrasonic probe at a position where the ultrasonic waves enter, and
a step of calculating flaw detection results using the calculated propagation paths.

## Patentansprüche

1. Ultraschalldefekterkennungsvorrichtung, umfassend:
eine Ultraschallsonde (1), die aus mehreren Ultraschallelementen besteht, die Ultraschallwellen unter einem im Voraus berechneten Übertragungswinkel auf ein Testobjekt (2) übertragen und die Ultraschallwellen empfangen, die von einem Testobjekt nach Eindringen von Ultraschallwellen aus den mehreren Ultraschallelementen in das Testobjekt reflektiert werden,
ein Verzögerungsmittel (5) zum Oszillieren jedes der mehreren Ultraschallelemente mit einer zufälligen Zeitverzögerung,
ein Speichermittel (6) zum Speichern der empfangenen Ultraschallsignale und
ein Analysemittel (7) zum Analysieren der Empfangssignale, die die Ultraschallsonde durch Empfangen der reflektierten Ultraschallwellen erhält, um Defekterkennungsergebnisse zu berechnen, wobei
das Analysemittel:
eine Einfallsposition der Ultraschallwellen auf einer Oberfläche des Testobjekts unter Verwendung von einem Übertragungswinkel der in das Testobjekt von der Ultraschallsonde eindringenden Ultraschallwellen und von Positionsinformationen der Ultraschallelemente, die die zu identifizierenden Ultraschallwellen übertragen, identifiziert,
die Neigung der Oberfläche des Testobjekts an der Einfallsposition berechnet, wobei die Neigung der Oberfläche die Neigung in Bezug auf eine Oberfläche des Testobjekts ist, die als planar betrachtet wird,
einen tatsächlichen Einfallswinkel unter Verwendung eines gemessenen Einfallswinkels, der Einfallsposition und der Neigung der Fläche berechnet,
die Ausbreitungswege der Ultraschallwellen von einem relativen Winkel zwischen der Oberfläche des Testobjekts und der Ultraschallsonde an einer Position berechnet, an der die Ultraschallwellen eindringen, und
die Defekterkennungsergebnisse unter Verwendung der ermittelten Ausbreitungswege berechnet.

2. Ultraschalldefekterkennungsvorrichtung nach Anspruch 1, wobei:
das Analysemittel einen Einfallswinkel der Ultraschallwellen für das Testobjekt auf der Grundlage des Übertragungswinkels, der Einfallsposition und des relativen Winkels berechnet,
das Analysemittel einen Brechungswinkel der in das Testobjekt eindringenden Ultraschallwellen auf der Grundlage des Einfallswinkels berechnet und
das Analysemittel die Defekterkennungsergebnisse unter Verwendung der Ausbreitungswege der Ultraschallwellen, die auf der Grundlage des Übertragungswinkels, der Einfallsposition und des Brechungswinkels ermittelt werden, ermittelt.

3. Ultraschalldefekterkennungsverfahren, umfassend:
einen Ultraschallwelleneindringschritt des Eindringens von Ultraschallwellen in ein Testobjekt unter einem im Voraus ermittelten Übertragungswinkel durch Oszillieren jedes von mehreren Ultraschallelementen in einer Ultraschallsonde mit einer zufälligen Zeitverzögerung,
einen Ultraschallwellenempfangsschritt des Empfangens von Ultraschallwellen, die von dem Testobjekt nach dem Ultraschallwelleneindringschritt reflektiert werden,
einen Speicherschritt des Speicherns der empfangenen Ultraschallsignale nach dem Ultraschallwellenempfangsschritt und
einen Analyseschritt des Analysierens der Empfangssignale, die die Ultraschallsonde durch Empfangen der reflektierten Ultraschallwellen zum Berechnen von Defekterkennungsergebnissen nach dem Ultraschallwellenempfangsschritt erhält, wobei
der Analyseschritt einschließt:
einen Schritt (S32) des Identifizierens der Einfallsposition unter Verwendung von einem Übertragungswinkel der in das Testobjekt von der Ultraschallsonde eindringenden Ultraschallwellen und von Positionsinformationen der die Ultraschallwellen übertragenden Ultraschallelemente zum Identifizieren einer Einfallsposition der Ultraschallwellen auf einer Fläche des Testobjekts,
einen Schritt (S33) des Berechnens der Neigung der Oberfläche des Testobjekts an der Einfallsposition, wobei die Neigung der Oberfläche die Neigung in Bezug auf eine Oberfläche des Testobjekts ist, die als planar betrachtet wird,
einen Schritt (S34) des Berechnens eines tatsächlichen Einfallswinkels unter Verwendung eines gemessenen Einfallswinkels, der Einfallsposition und der Neigung der Oberfläche,
einen Schritt des Berechnens von Ausbreitungswegen der Ultraschallwellen von einem relativen Winkel zwischen der Oberfläche des Testobjekts und der Ultraschallsonde an einer Position, an der die Ultraschallwellen eindringen, und
einen Schritt des Berechnens von Defekterkennungsergebnissen unter Verwendung der ermittelten Ausbreitungswege.

## Revendications

1. Dispositif de détection de défauts à ultrasons, comprenant :
une sonde ultrasonore (1) constituée d'une pluralité d'éléments ultrasonores qui transmettent des ondes ultrasonores à un objet de test (2) avec un angle de transmission calculé à l'avance qui reçoivent les ondes ultrasonores réfléchies par un objet de test après que les ondes ultrasonores aient pénétré dans l'objet de test à partir de la pluralité d'éléments ultrasonores ;
un moyen de retard (5) pour faire osciller chacun de la pluralité d'éléments ultrasonores avec un retard de temps arbitraire ;
un moyen de stockage (6) pour stocker les signaux ultrasonores reçus ; et
un moyen d'analyse (7) pour analyser les signaux de réception que la sonde ultrasonore obtient en recevant les ondes ultrasonores réfléchies pour calculer les résultats de la détection de défauts,
le moyen d'analyse :
identifie la position d'incidence des ondes ultrasonores sur une surface de l'objet de test à l'aide d'un angle de transmission d'ondes ultrasonores pénétrant dans l'objet de test à partir de la sonde ultrasonore et les informations de position des éléments ultrasonores transmettant les ondes ultrasonores à identifier,
calcule la pente de la surface de l'objet de test au niveau de la position d'incidence, la pente de la surface étant la pente par rapport à une surface de l'objet de test qui est supposé plane,
calcule un angle d'incidence réel à l'aide d'un angle d'incidence mesuré, de la position d'incidence et de ladite pente de la surface,
calcule les trajets de propagation des ondes ultrasonores à partir d'un angle relatif entre la surface et l'objet de test et la sonde ultrasonore à une à laquelle les ondes ultrasonores pénètrent, et
calcule des résultats de détection de défauts à l'aide des trajets de propagation calculés.

2. Dispositif de détection de défauts à ultrasons selon la revendication 1, dans lequel :
le moyen d'analyse calcule un angle d'incidence des ondes ultrasonores pour l'objet de test sur la base de l'angle de transmission, de la position d'incidence et de l'angle relatif ;
le moyen d'analyse calcule un angle de réfraction des ondes ultrasonores pénétrant dans l'objet de test sur la base de l'angle d'incidence ; et
le moyen d'analyse calcule les résultats de détection de défauts à l'aide des trajets de propagation des ondes ultrasonores qui sont calculés sur la base de l'angle de transmission, de la position d'incidence et de l'angle de réfraction.

3. Procédé de détection de défauts par ultrasons comprenant :
une étape de pénétration des ondes ultrasonores pour la pénétration des ondes ultrasonores dans un objet de test avec un angle de transmission calculé à l'avance en faisant osciller chacun d'une pluralité d'éléments ultrasonores dans une sonde ultrasonore avec un retard de temps arbitraire ;
une étape de réception d'ondes ultrasonores pour la réception des ondes ultrasonores réfléchies par l'objet de test après l'étape de pénétration des ondes ultrasonores ;
une étape de stockage pour le stockage des signaux ultrasonores reçus après l'étape de réception des ondes ultrasonores ; et
une étape d'analyse des signaux de réception que la sonde ultrasonore obtient en recevant les ondes ultrasonores réfléchies pour calculer des résultats de détection de défauts après l'étape de réception des ondes ultrasonores, dans lequel
l'étape d'analyse comprend :
une étape d'identification de position d'incidence (S32) pour l'utilisation d'un angle de transmission d'ondes ultrasonores pénétrant dans l'objet de test à partir de la sonde ultrasonore et d'informations de position des éléments ultrasonores transmettant les ondes ultrasonores pour identifier une position d'incidence des ondes ultrasonores sur une surface de l'objet de test,
une étape de calcul de la pente (S33) de la surface de l'objet de test au niveau de la position d'incidence, la pente de la surface étant une pente par rapport à une surface de l'objet de test qui est supposée plane,
une étape de calcul d'un angle d'incidence réel (S34) à l'aide d'un angle d'incidence mesuré, de la position d'incidence et de ladite pente de la surface,
une étape de calcul des trajets de propagation des ondes ultrasonores à partir d'un angle relatif entre la surface de l'objet de test et la sonde ultrasonore au niveau d'une position où les ondes ultrasonores pénètrent et
une étape de calcul de résultats de détection de défauts à l'aide des trajets de propagation calculés.
